**Europäisches Patentamt**

**European Patent Office**

**Office européen des brevets**

(19)

(11) Numéro de publication : **0 019 551 B1**

(12) ## FASCICULE DE BREVET EUROPÉEN

(45) Date de publication du fascicule du brevet : **03.02.82**

(51) Int. Cl.³ : **B 23 K 9/235**, B 23 K 33/00

(21) Numéro de dépôt : **80400678.1**

(22) Date de dépôt : **14.05.80**

(54) **Procédé d'assemblage final d'une cuve de réacteur nucléaire.**

(30) Priorité : **16.05.79 FR 7912399**

(43) Date de publication de la demande : **26.11.80 (Bulletin 80/24)**

(45) Mention de la délivrance du brevet : **03.02.82 Bulletin 82/05**

(84) Etats contractants désignés : **AT BE CH DE GB IT LI NL SE**

(56) Documents cités :
**US - A - 3 268 248**

**WELDING JOURNAL, vol. 56, n° 2, février 1977, Miami, US**
**ROBERT M. POWERS : « Big tools for deep space » pages 13-16**

(73) Titulaire : **Framatome**
**Tour Fiat 1 place de la Coupole**
**F-92400 Courbevoie (FR)**

(72) Inventeur : **Guignard, Paul**
**16 rue Abbé Perrot**
**F-71200 Le Creusot (FR)**
Inventeur : **Commeau, Alain**
**15 rue des Genêts**
**Torcy F-71210 Montchanin (FR)**

(74) Mandataire : **Bouget, Lucien et al**
**CREUSOT-LOIRE 15 rue Pasquier**
**F-75383 Paris Cedex 08 (FR)**

Imprimerie Jouve, 18, rue St-Denis, 75001 Paris, France

## Procédé d'assemblage final d'une cuve de réacteur nucléaire

L'invention concerne un procédé d'assemblage final d'une cuve de réacteur nucléaire constituée par deux sous-ensembles à symétrie de révolution préalablement assemblés et usinés de façon à prévoir des éléments de positionnement des équipements internes de la cuve.

Dans la construction des cuves de réacteur nucléaire, en particulier des cuves de réacteur nucléaire à eau pressurisée, on assemble dans un premier temps des éléments tels que des viroles, des brides ou des fonds sphériques pour constituer des sous-ensembles à l'intérieur desquels on vient placer et usiner des organes qui serviront au positionnement et au maintien des composants qui seront disposés à l'intérieur de la cuve une fois que l'assemblage de cette cuve est totalement terminé.

Dans le cas des réacteurs nucléaires à eau pressurisée, la cuve de forme sensiblement cylindrique et fermée par des fonds sphériques comporte un grand nombre de composants élémentaires qui sont assemblés dans un premier temps sous forme de deux sous-ensembles, un sous-ensemble supérieur et un sous-ensemble inférieur, avant l'assemblage final.

Le sous-ensemble supérieur comporte en particulier la bride de cuve destinée à recevoir le couvercle et la virole porte-tubulures. Le sous-ensemble inférieur comporte généralement la virole de cœur, la virole inférieure et un fond sphérique.

Lors de la fabrication de ces sous-ensembles, on dispose à l'intérieur de la cuve et on usine à leurs cotes définitives un certain nombre d'éléments destinés au supportage, au guidage et au positionnement des équipements internes à la cuve.

Il est donc nécessaire, au moment de l'assemblage final de la cuve, de respecter un très bon alignement entre les éléments qui se correspondent sur l'une et l'autre parties de la cuve en cours d'assemblage. C'est ainsi, par exemple, qu'il est nécessaire d'assurer un très bon alignement entre les axes des rainures de clavette de la bride de cuve et les axes des supports des équipements internes.

Pour réaliser cet alignement parfait il est donc nécessaire de réaliser l'alignement des axes des deux sous-ensembles, l'un et l'autre de symétrie de révolution autour de l'axe de la cuve, de réaliser un centrage parfait d'un sous-ensemble par rapport à l'autre suivant leur surface de jonction et d'assurer un positionnement parfait en orientation d'un sous-ensemble par rapport à l'autre, autour de l'axe de la cuve.

L'un et l'autre sous-ensembles symétriques de révolution autour de l'axe vertical de la cuve comportent à l'une de leurs extrémités une surface de jonction annulaire le long de laquelle se fera l'assemblage des deux sous-ensembles pour la réalisation de la cuve.

Avant l'assemblage, au cours des opérations d'usinage final sur les deux sous-ensembles, on réalise des rebords en saillie sur ces surfaces de jonction destinés à venir en contact lors de l'opération d'accostage des deux sous-ensembles avant l'opération de réalisation du joint de soudure final.

L'un de ces rebords est usiné sur chacune des surfaces de jonction, à la partie centrale de cette surface de jonction annulaire et sur toute la périphérie de la cuve.

On usine également un autre rebord sur chacune des surfaces de jonction le long du périmètre intérieur de cette surface de jonction et également sur toute la périphérie de la cuve.

Au moment de l'accostage, il est donc nécessaire de mettre en coïncidence chacun des rebords avec son homologue usiné sur la surface de jonction de l'autre sous-ensemble.

On a ainsi réalisé par mise en coïncidence des deux rebords la délimitation de deux espaces entre les surfaces de jonction des deux sous-ensembles séparés par une paroi constituée par les deux rebords centraux mis en contact.

L'espace annulaire externe limité par les surfaces de jonction et les rebords annulaires est ouvert vers l'extérieur de la cuve et permet, lorsque les positionnements des deux sous-ensembles sont réalisés avec précision, d'effectuer une première passe de soudage par dépôt du métal d'apport dans une partie de cet espace annulaire.

Les deux sous-ensembles étant solidarisés par cette soudure partielle, il est alors possible d'éliminer par usinage, d'une part les rebords aussi bien intérieurs que centraux et d'autre part une partie du métal d'apport après solidification.

L'assemblage final de la cuve est réalisé par dépôt du métal d'apport dans la totalité du volume des deux espaces annulaires.

Cette façon d'opérer nécessite l'usinage avec des tolérances serrées de rebords annulaires de grande dimension s'étendant sur toute la périphérie de la cuve.

D'autre part, au moment de l'accostage des deux sous-ensembles, il est très difficile de réaliser à la fois l'alignement des axes de ces deux sous-ensembles suivant l'axe de la cuve, le centrage des deux éléments l'un par rapport à l'autre et le positionnement précis en orientation de ces deux sous-ensembles l'un par rapport à l'autre.

Le but de l'invention est donc de proposer un procédé d'assemblage final d'une cuve de réacteur nucléaire comprenant deux sous-ensembles à symétrie de. révolution assemblés et usinés de façon à prévoir des éléments de positionnement des équipements internes à la cuve et présentant des surfaces de jonction annulaires dans deux plans perpendiculaires aux axes de symétrie des sous-ensembles qui sont mis en concordance lors de l'assemblage final réalisé par soudage avec dépôt du métal d'apport dans deux espaces annulaires limités par les surfaces de jonction, débouchant l'un à l'intérieur et l'autre à l'extérieur de la cuve sur toute sa périphérie et séparés par une paroi annulaire constituée par deux rebords d'assemblage usinés en saillie sur chacune des surfaces de jonction, à la partie médiane de cette surface annulaire sur tout le périmètre de la cuve et mis en coïncidence et au contact l'un de l'autre lors de l'assemblage final de la cuve, le soudage par dépôt du métal d'apport dans les deux espaces annulaires étant précédé par un remplissage partiel d'un des espaces du métal d'apport et une élimination ultérieure par usinage des rebords constituant la paroi annulaire et d'une partie du métal déposé, les opérations d'assemblage étant réalisées avec les sous-ensembles disposés avec leur axe horizontal, ce procédé devant permettre de réaliser un centrage, un alignement et un positionnement en orientation autour de l'axe commun des deux sous-ensembles suffisamment précis pour obtenir un alignement parfait des éléments de support et de guidage des organes internes de la cuve, par des opérations simples d'usinage, d'accostage et de soudage de ces deux sous-ensembles.

Dans ce but, pour la mise en œuvre du procédé suivant l'invention :

— on prévoit sur la surface de jonction d'un des sous-ensembles au niveau d'un des espaces annulaires et sur une fraction du périmètre de la cuve, au moins trois talons de centrage femelles en saillie par rapport à la surface de jonction et comportant un logement en retrait par rapport à la surface externe du talon,

— on prévoit sur la surface de jonction de l'autre sous-ensemble, au moins trois talons de centrage mâles dont la forme, la dimension et la position correspondent à la forme, la dimension et la position des logements des talons femelles, les talons mâles et femelles étant dans des positions repérées de façon précise par rapport aux éléments de positionnement des équipements internes de la cuve et l'un au moins des talons mâles et l'un au moins des talons femelles comportant un logement de clavette de direction radiale,

— on réalise l'accostage des deux sous-ensembles de la cuve en introduisant les talons mâles à l'intérieur des logements des talons femelles correspondants et en mettant en contact les surfaces correspondantes des rebords d'assemblage pour réaliser à la fois le centrage, l'alignement axial et le positionnement en orientation des deux sous-ensembles l'un par rapport à l'autre tout en vérifiant l'alignement de façon optique,

— on introduit une clavette dans le couple de logements prévu sur l'un des couples de talons, venus en alignement lors de l'opération d'accostage afin de maintenir le positionnement des deux sous-ensembles,

— on réalise alors l'assemblage des talons entre eux par des points de soudure, avant le remplissage partiel de l'un des espaces annulaires par le métal d'apport,

— et on élimine par usinage les talons mâles et les talons femelles au cours de l'opération d'usinage sur les rebords d'assemblage et le dépôt de métal d'apport avant remplissage total des deux espaces annulaires par le métal d'apport pour terminer l'assemblage.

On va maintenant décrire, à titre d'exemple non limitatif, un mode de réalisation du procédé d'assemblage suivant l'invention, dans le cas d'une cuve de réacteur nucléaire à eau pressurisée constituée par un sous-ensemble supérieur et par un sous-ensemble inférieur préalablement assemblés et usinés.

La figure 1 représente une demi-vue en coupe par un plan vertical d'une cuve de réacteur nucléaire à eau pressurisée après son assemblage final.

La figure 2 représente une vue en plan de la cuve au niveau du joint final entre les deux sous-ensembles, après l'accostage de ces deux sous-ensembles et avant la réalisation du joint de soudure.

Les figures 3, 4 et 5 représentent des vues en coupe suivant A-A de la figure 2, au cours des différentes étapes de l'assemblage depuis l'accostage des deux sous-ensembles jusqu'à la réalisation définitive du joint d'assemblage.

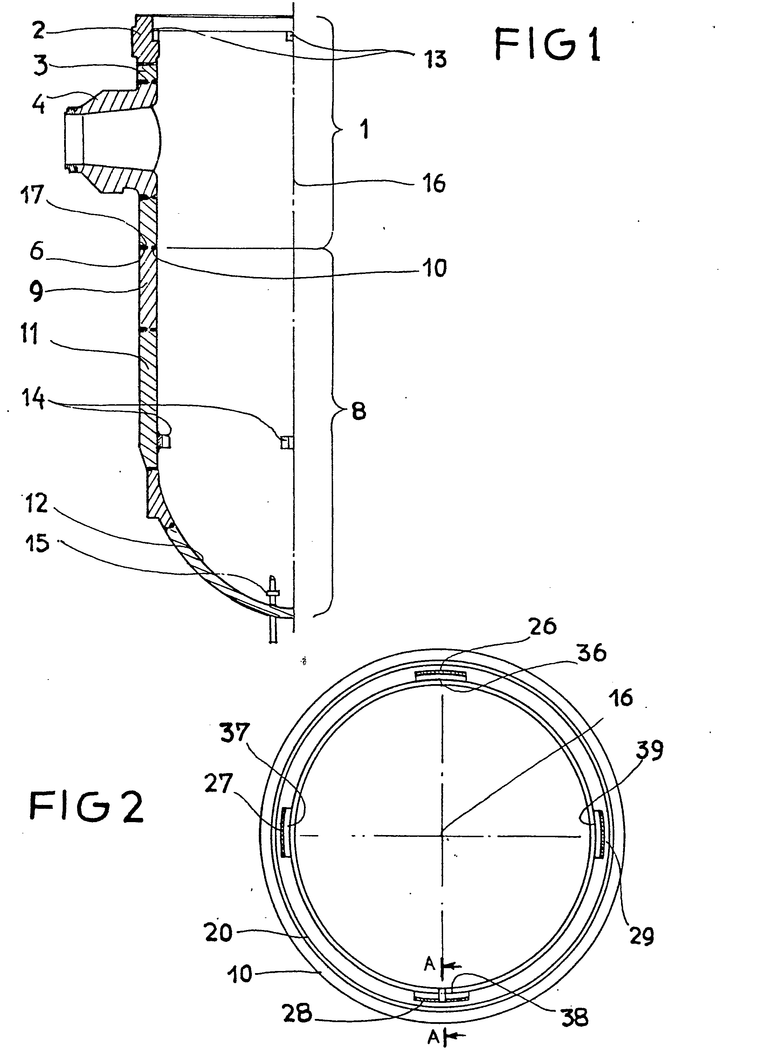

Sur la figure 1, la cuve a été représentée dans son état d'achèvement après réalisation du joint final entre les deux sous-ensembles.

Le sous-ensemble supérieur 1 est constitué par plusieurs pièces de révolution soudées les unes aux autres suivant des surfaces de jonction perpendiculaires à l'axe de la cuve.

Les éléments composant le sous-ensemble supérieur sont la bride de cuve 2 et la virole porte-tubulures 3 comportant les tubulures d'arrivée et de sortie du fluide primaire telles que 4.

A sa partie inférieure la virole porte-tubulures est usinée de façon à constituer la surface de fonction 6 permettant l'assemblage par soudage avec le sous-ensemble inférieur 8 constitué successivement par la virole de cœur 9 comportant à sa partie supérieure la surface de jonction 10, la virole inférieure 11 et le fond sphérique 12.

Au cours des opérations d'usinage réalisées sur le sous-ensemble supérieur 1, on prévoit en particulier dans la bride de cuve 2 des logements de clavette 13 pour le guidage des équipements internes de la cuve au moment de leur introduction dans cette cuve.

Le sous-ensemble inférieur comporte, sur la partie interne de la base de la virole inférieure, des supports tels que 14 pour le guidage des équipements internes.

Le fond sphérique 12 est traversé par des passages tubulaires d'instrumentation 15 dont il faut assurer le positionnement précis et l'orientation dans la direction verticale au moment du montage de la cuve et après l'opération d'assemblage.

Lorsque la cuve est assemblée, comme représenté à la figure 1, les axes des supports 14 sont parfaitement alignés avec les axes des rainures de clavette 13 usinées dans la bride de cuve.

L'axe de cuve 16 vertical lorsque la cuve est en fonctionnement est l'axe de symétrie commun aux deux sous-ensembles 1 et 8.

Pour la réalisation de l'assemblage des sous-ensembles 1 et 8 avec réalisation du joint final 17 par dépôt de métal d'apport dans des logements annulaires ménagés entre les deux surfaces de jonction 6 et 10, suivant le procédé de l'invention ou suivant les procédés antérieurs, l'axe 16 de la cuve est disposé horizontalement pendant ces opérations.

Sur la figure 2, on voit les talons femelles de la surface de jonction supérieure en coupe au niveau du plan de raccordement et le plan de jonction inférieur 10 usiné sur la partie supérieure de la virole de cœur 9 sur laquelle a été prévu, au moment de l'usinage du sous-ensemble inférieur, un rebord annulaire 20 sur tout le périmètre de la cuve.

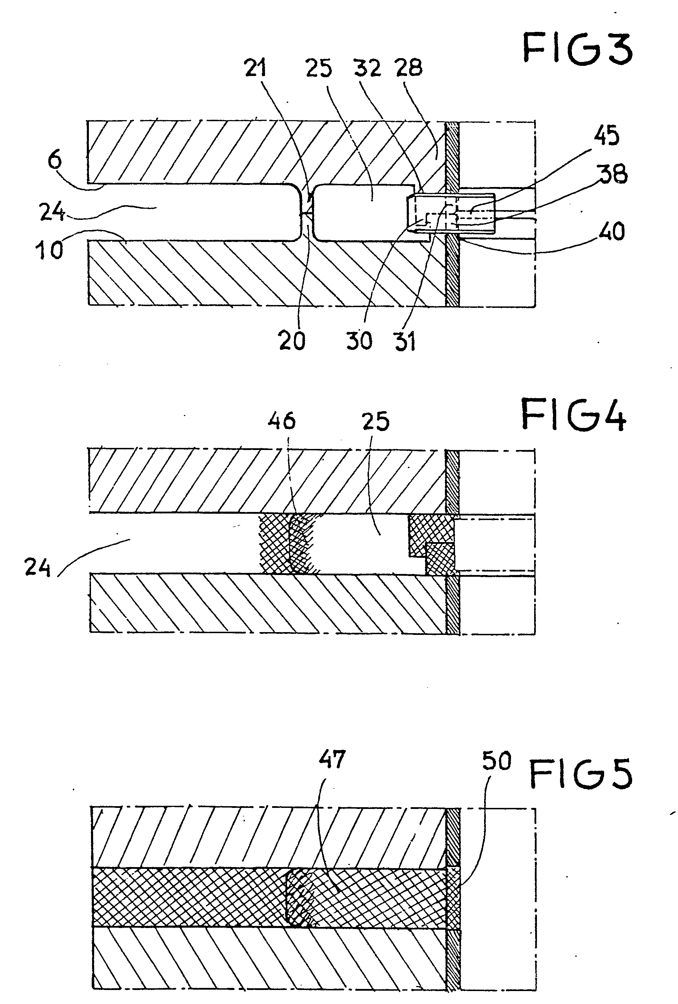

En se reportant à la fois aux figures 2 et 3, on voit que le sous-ensemble supérieur 1 se termine par une surface de jonction 6 sur laquelle a été usiné un rebord annulaire et identique au rebord 20, à la base de la virole porte-tubulures 3. Ce rebord 21 vient au contact du rebord 20 lors de l'accostage des deux sous-ensembles pour la constitution d'une paroi continue entre les deux espaces annulaires 24 et 25 à l'intérieur desquels on déposera le métal d'apport lors de la réalisation de l'assemblage.

On voit également sur les figures 2 et 3, que le sous-ensemble supérieur 1 comporte sur sa surface de jonction 6 quatre talons femelles 26, 27, 28 et 29 centrés respectivement sur les positions 0°, 270°, 180° et 90° de la cuve, si l'on considère une rotation de la cuve autour de son axe 16.

Chacun des talons femelles tels que 28 représenté à la figure 3 comporte une partie en saillie 30 débordant au-delà de la zone de jonction entre les rebords 20 et 21 et une partie en retrait 31 au niveau de la surface de jonction entre les rebords 20 et 21.

A l'intérieur du talon femelle 28 est ménagé un logement de clavette 32 de direction radiale.

Les talons femelles 26, 27 et 29 ne comportent pas de logement de clavette.

Le sous-ensemble inférieur 8 comporte également, à sa partie supérieure, c'est-à-dire à la partie supérieure de la virole de cœur 9, des talons de centrage mâles 36, 37, 38 et 39.

On voit sur la figure 3 que le talon de centrage mâle 38 comporte un logement de clavette 40 à la différence des talons de centrage 36, 37 et 39 qui ne comportent pas un tel logement.

Chacun des talons mâles et femelles s'étend sur une faible longueur de la circonférence de la cuve et est obtenu par usinage sur une fraiseuse-aléseuse. Ces talons sont de forme cylindrique et sont centrés par rapport aux organes de positionnement des équipements internes de la cuve, c'est-à-dire par rapport aux axes des rainures de clavette de guidage des équipements internes sur la bride de cuve ou par rapport à l'axe des supports des équipements internes sur la virole inférieure.

De plus, la forme et la dimension des talons mâles correspondent à la forme et à la dimension de la partie en retrait du talon femelle correspondant.

De cette manière, au moment de l'accostage, les talons mâles viennent en position dans les logements des talons femelles ainsi qu'il est visible à la figure 3.

Une fois que l'usinage des surfaces de jonction, des rebords d'assemblage et des talons de centrage a été réalisé, lors de l'opération d'usinage final des sous-ensembles, chacun des sous-ensembles est mis en place sur des vireurs disposés dans l'alignement l'un de l'autre, ces vireurs permettant une rotation de chacun des sous-ensembles autour de leur axe de symétrie disposé horizontalement.

Le sous-ensemble inférieur 8 placé sur chantier vireur est mis en position par rotation autour de l'axe de symétrie de ce sous-ensemble inférieur, de façon que le logement de clavette 40 usiné dans le talon mâle 38 soit disposé avec son axe vertical à la partie inférieure du sous-ensemble.

On prend alors en charge le sous-ensemble supérieur préalablement orienté de façon que ses talons de centrage femelles correspondent sensiblement en position aux talons de centrage mâles du sous-ensemble inférieur, grâce à un pont de manœuvre qui permet de réaliser l'accostage des deux sous-ensembles par emboîtement des talons mâles dans les logements des talons femelles.

Préalablement à l'emboîtement des deux sous-ensembles le chantier vireur pour le support du sous-ensemble supérieur a été réglé de façon que ses galets viennent en position sous la bride de cuve du sous-ensemble supérieur 1.

Le vireur de support du sous-ensemble inférieur est alors réglé pour tenir compte d'une éventuelle ovalisation des pièces à assembler.

Au cours de l'emboîtement des talons, le talon mâle 36 vient en position dans le talon femelle 26, le talon mâle 37 dans le talon femelle 27, le talon mâle 38 dans le talon femelle 28 et le talon mâle 39 dans le talon femelle 29.

On utilise alors une lunette d' isée pour vérifier la concordance entre les ax éfinis par les supports intérieurs des équipements internes de la cuve disposée au niveau du sous-ensemble inférieur de la cuve et les axes des logements de clavette disposés au niveau du sous-ensemble supérieur de la cuve, ce qui permet de contrôler le bon positionnement des deux sous-ensembles à la fois en ce qui concerne l'alignement des axes, le centrage des deux sous-ensembles et la position en orientation.

Lors de l'engagement des talons mâles dans les talons femelles et la mise en position des deux sous-ensembles, les deux logements de clavette ménagés dans les talons 28 et 38 sont venus en concordance si bien qu'il est possible d'introduire une clavette 45 dans le logement constitué par les logements 32 et 40 pour maintenir en position les deux sous-ensembles, au moins en ce qui concerne l'orientation autour de l'axe de ces sous-ensembles.

On dispose alors des mires en trois points de la cuve, l'une en fond de cuve, une autre dans la zone du joint final et la troisième sur la bride de cuve. A l'aide d'une lunette de visée on peut alors repérer les défauts d'alignement éventuels de la cuve et remédier à ces défauts en déplaçant les sous-ensembles dans la direction verticale grâce à des vérins qui permettent d'établir un contact parfait entre les surfaces des talons mâles et femelles correspondants.

On a alors réalisé un positionnement parfait des sous-ensembles l'un par rapport à l'autre aussi bien en ce qui concerne l'alignement qu'en ce qui concerne le centrage et l'orientation autour de l'axe de la cuve, grâce aux talons de centrage usinés dans des positions définies de façon précise par rapport aux organes de centrage et de positionnement disposés dans la cuve.

On peut alors réaliser la fixation des talons entre eux par des points de soudure et vérifier que l'alignement des deux sous-ensembles est toujours bon grâce à la lunette de visée.

On peut alors effectuer un dépôt de métal d'apport à l'intérieur de l'espace annulaire externe 24, ainsi qu'il est visible à la figure 4. Ce dépôt partiel de métal d'apport 46 dans le fond de l'espace annulaire 24 contre les rebords 20 et 21 permet de réaliser une fixation définitive des deux sous-ensembles l'un par rapport à l'autre.

On effectue alors une élimination par usinage des talons de centrage mâles et femelles à partir de l'intérieur de la cuve.

Au cours de la même opération d'usinage, on élimine ensuite les rebords 20 et 21 et une partie du métal déposé 46, ainsi qu'il est représenté à la figure 4, où les talons supprimés sont représentés recouverts par des hachures comme le métal déposé 46.

On termine alors l'assemblage de deux sous-ensembles en déposant du métal d'apport à l'intérieur des espaces annulaires 24 et 25 de façon à les remplir complétement de métal d'apport 47.

Pendant toutes les opérations de soudage on réalise un préchauffage de la zone du joint pour faciliter le soudage.

Les opérations de soudage sont effectuées à partir de l'extérieur de la cuve en ce qui concerne le remplissage de l'espace 24 et à partir de l'intérieur de la cuve en ce qui concerne le remplissage de l'espace annulaire 25.

On termine l'opération d'assemblage en recouvrant d'un revêtement en acier inoxydable 50 la soudure à l'intérieur de la cuve.

On voit donc que les avantages du procédé suivant l'invention sont de réaliser pratiquement en une seule opération d'accostage, grâce aux talons de centrage, le positionnement parfait des deux sous-ensembles constituant la cuve.

Un autre avantage du procédé suivant l'invention est de ne nécessiter l'usinage que de talons occupant une faible portion de la périphérie de la cuve, ce qui facilite cette opération d'usinage.

L'usinage des talons étant réalisé lors des opérations d'usinage intérieur des sous-ensembles, il est très facile de centrer ces talons sur les axes des éléments de guidage et de support des équipements internes de la cuve.

Enfin la présence d'une clavette permettant de solidariser momentanément les talons de centrage mâles et femelles, c'est-à-dire les deux sous-ensembles, permet d'éviter des défauts de positionnement en ce qui concerne l'orientation relative des deux sous-ensembles autour de l'axe de la cuve.

Mais l'invention ne se limite pas au mode de réalisation qui vient d'être décrit, elle en comporte au contraire toutes les variantes.

C'est ainsi qu'on peut imaginer la réalisation de talons de centrage dans une opération différente d'un usinage sur les sous-ensembles, par exemple en rapportant les talons sur les surfaces de jonction des deux sous-ensembles et qu'on peut également imaginer des talons d'une forme différente, à partir du moment où les talons mâles peuvent s'engager dans les talons femelles de façon à positionner le sous-ensemble correspondant de façon extrêmement précise en ce qui concerne son alignement, son centrage et son orientation par rapport à l'autre sous-ensemble.

Enfin, le procédé suivant l'invention s'applique non seulement à la fabrication de cuves de réacteurs nucléaires à eau pressurisée mais également à la fabrication de cuves de réacteurs nucléaires d'un autre type dont la fabrication suppose l'assemblage préalable de deux sous-ensembles ayant une symétrie de révolution par rapport à l'axe de la cuve.

**Revendications**

1. Procédé d'assemblage final d'une cuve de réacteur nucléaire comprenant deux sous-ensembles (1, 8) à symétrie de révolution assemblés et usinés de façon à prévoir des éléments de positionnement des équipements internes de la cuve et présentant des surfaces de jonction annulaires (6, 10) dans deux plans perpendiculaires aux axes de symétrie des sous-ensembles qui sont mis en concordance lors de l'assemblage final réalisé par soudage avec dépôt du métal d'apport dans deux espaces annulaires (24, 25) limités par les surfaces de jonction, débouchant l'un à l'intérieur et l'autre à l'extérieur de la cuve sur toute sa périphérie et séparés par une paroi annulaire constituée par deux rebords (20, 21) d'assemblage usinés en saillie sur chacune des surfaces de jonction à la partie médiane de cette surface annulaire, sur tout le périmètre de la cuve et mis en coïncidence et au contact l'un de l'autre lors de l'assemblage final de la cuve le soudage par dépôt de métal d'apport dans les deux espaces annulaires étant précédé par un remplissage partiel d'un des deux espaces par du métal d'apport (46) et une élimination ultérieure par usinage des rebords (20, 21) constituant la paroi annulaire et d'une partie du métal déposé (46), les opérations d'assemblage étant réalisées sur les sous-ensembles disposés avec leur axe horizontal (16), caractérisé par le fait qu'on prévoit sur la surface de jonction (6) d'un des sous-ensembles (1), au niveau d'un des espaces annulaires (24, 25) et sur une fraction du périmètre de la cuve, au moins trois talons de centrage (26, 27, 28, 29) femelles en saillie par rapport à la surface de jonction (6) et comportant un logement en retrait (31) par rapport à la surface externe (30) du talon, qu'on prévoit sur la face de jonction de l'autre sous-ensemble (8) au moins trois talons de centrage (36, 37, 38, 39) dont la forme, la dimension et la position correspondent à la forme, à la dimension et à la position des logements (31) des talons femelles (26, 27, 28, 29), les talons mâles (36, 37, 38, 39) et femelles (26, 27, 28, 29) étant dans des positions repérées de façon précise par rapport aux éléments de positionnement des équipements internes de la cuve, et l'un au moins des talons mâles (38) et l'un au moins des talons femelles (28) comportant un logement de clavette (32, 40) de direction radiale, qu'on réalise l'accostage des deux sous-ensembles (1, 8) de la cuve en introduisant les talons mâles à l'intérieur des logements des talons femelles correspondants et en mettant en contact les surfaces correspondantes des rebords d'assemblage (20, 21), pour réaliser à la fois le centrage, l'alignement axial et le positionnement en orientation des deux sous-ensembles (1, 8), l'un par rapport à l'autre tout en vérifiant l'alignement de façon optique, qu'on introduit une clavette (45) dans le couple de logements (32, 40) prévu sur l'un des couples de talons (28, 38) venus en alignement lors de l'opération d'accostage, afin de maintenir le positionnement des deux sous-ensembles (1, 8), qu'on réalise alors l'assemblage des talons entre eux par des points de soudure avant le remplissage partiel d'un des espaces annulaires (24) par le métal d'apport, et qu'on élimine par usinage les talons mâles et les talons femelles au cours de l'opération d'usinage sur les rebords d'assemblage (20, 21) et le dépôt de métal d'apport (46) avant remplissage total des deux espaces annulaires (24, 25) par le métal d'apport pour terminer l'assemblage.

2. Procédé d'assemblage suivant la revendication 1, caractérisé par le fait que les talons mâles (36, 37, 38, 39) et les talons femelles (26, 27, 28, 29) sont réalisés sur les sous-ensembles (1,8) correspondants lors de l'opération d'usinage final de ces deux sous-ensembles en position horizontale.

3. Procédé d'assemblage suivant l'une quelconque des revendications 1 et 2, dans le cas d'une cuve de réacteur à eau pressurisée, caractérisé par le fait que quatre talons de centrage (26, 27, 28, 29) et (36, 37, 38, 39) sont disposés sur chacun des sous-ensembles (1, 8), ces talons étant centrés sur le prolongement des axes des rainures de clavette (13) ménagées dans la bride de cuve (2) au cours de l'usinage final du sous-ensemble supérieur (1) et sur les axes des supports (14) des équipements internes de la cuve en ce qui concerne le sous-ensemble inférieur (8).

4. Procédé d'assemblage suivant l'une quelconque des revendications 1, 2 et 3, caractérisé par le fait que l'alignement des deux sous-ensembles (1, 8) constituant la cuve est vérifié au cours des opérations d'assemblage grâce à une lunette de visée et à des mires disposées à des endroits précis de la cuve.

5. Procédé d'assemblage suivant l'une quelconque des revendications 1, 2, 3 et 4, caractérisé par le fait que les sous-ensembles sont disposés sur des chantiers vireurs permettant de les faire tourner autour de leur axe de symétrie disposé à l'horizontal, pendant les opérations d'assemblage, l'un des sous-ensembles étant manœuvré par un pont roulant permettant d'effectuer l'engagement des talons mâles (36, 37, 38, 39) dans les logements des talons femelles (26, 27, 28, 29).

**Claims**

1. A method of final assembly of a nuclear reactor vessel comprising two sub-assemblies (1, 8) having symmetry of revolution, assembled and machined so as to provide parts for positioning equipment internal to the vessel and exhibiting annular joint surfaces (6, 10) in two planes perpendicular to the axes of symmetry of the sub-assemblies which are placed in concordance at the time of the final assembly achieved by welding with deposit of the filler metal in two annular gaps (24, 25) bounded by the joint surfaces, opening, the one towards the inside and the other towards the outside of the vessel along its whole periphery, and separated by an annular wall consisting of two assembly rims (20, 21) machined projecting along each of the joint surfaces at the central part of this annular surface along the whole perimeter of the vessel and placed in coincidence and in contact with one another at the time of the final assembly of the vessel, the welding by deposit of filler metal in the two annular gaps being preceded by partial filling of one of the two gaps by filler metal (46) and subsequent elimination by machining of the rims (20, 21) forming the annular wall and part of the metal deposited (46), the operations of assembly being carried out upon the sub-assemblies arranged with their axis horizontal (16), characterized by the fact : that on the joint surface (6) of one of the sub-assemblies (1) at the level of one of the annular gaps (24, 25) and over a fraction of the perimeter of the vessel at least three female centreing beads (26, 27, 28, 29) are provided, projecting with respect to the joint surface (6) and including a seating (31) sunk with respect to the outer surface (30) of the bead ; that on the joint face of the other sub-assembly (8) at least three centreing beads (36, 37, 38, 39) are provided, the shape, dimensions and positions of which correspond with the shape, dimensions and positions of the seatings (31) in the female beads (26, 27, 28, 29), the male (36, 37, 38, 39) and female (26, 27, 28, 29) beads being in positions marked accurately with respect to the parts for positioning equipment internal to the vessel, and at least one of the male beads (38) and at least one of the female beads (28) including a seating for a key (32, 40) in the radial direction ; that the matching of the two sub-assemblies (1, 8) of the vessel is carried out by introducing the male beads inside the seatings in the corresponding female beads and by putting in contact the corresponding surfaces of the assembly rims (20, 21) in order to effect both the centreing, the axial alignment and the angular positioning of the two sub-assemblies (1, 8) with respect to one another whilst checking the alignment optically ; that a key (45) is introduced into the pair of seatings (32, 40) provided on one of the pairs of beads (28, 38) which have come into alignment at the time of the matching operation, in order to maintain the positioning of the two sub-assemblies (1, 8) ; that then the assembly of the beads together is effected by tack welds before the partial filling of one of the annular gaps (24) with filler metal ; and that the male beads and the female beads are eliminated by machining during the course of the operation of machining along the assembly rims (20, 21) and the deposit of filler metal (46) before total filling of the two annular gaps (24, 25) by the filler metal in order to terminate the assembly.

2. A method of assembly as in Claim 1, characterized by the fact that the male beads (36, 37, 38, 39) and the female beads (26, 27, 28, 29) are carried out on the corresponding sub-assemblies (1, 8) at the time of the final machining operation on these two sub-assemblies in the horizontal position.

3. A method of assembly as in either of the Claims 1 and 2, in the case of a pressurized-water reactor vessel, characterized by the fact that four centreing beads (26, 27, 28, 29) and (36, 37, 38, 39) are arranged on each of the sub-assemblies (1, 8), these beads being centred upon the prolongation of the axes of the grooves for keys (13) arranged in the vessel flange (2) during the course of the final machining of the upper sub-assembly (1) and upon the axes of the supports (14) for the equipment internal to the vessel as far as the lower sub-assembly (8) is concerned.

4. A method of assembly as in any one of the Claims 1, 2 and 3, characterized by the fact that the alignment of the two sub-assemblies (1, 8) forming the vessel is checked during the course of the assembly operations thanks to a sighting telescope and to sights arranged at precise places in the vessel.

5. A method of assembly as in any one of the Claims 1, 2, 3 and 4, characterized by the fact that the sub-assemblies are arranged on turning cradles enabling them to be made to turn about their axis of symmetry arranged horizontal, during the assembly operations, one of the sub-assemblies being manœuvred by a bridge crane enabling the engagement of the male beads (36, 37, 38, 39) in the seatings in the female beads (26, 27, 28, 29) to be carried out.

**Ansprüche**

1. Verfahren zum Endzusammenbau eines Kernreaktorgefäßes, das zwei rotationssymmetrische Untereinheiten (1, 8) umfaßt, die so zusammengebaut und ausgebildet sind, daß sie Lagerungselemente für die innere Ausrüstung des Gefäßes bilden und ringförmige Verbindungs- bzw. Stoßflächen (6, 10) in zwei zu den Symmetrieachsen der Untereinheiten senkrecht stehenden Ebenen aufweisen, welche Untereinheiten beim Endzusammenbau aufeinander abgestimmt werden, welcher durch Verschweißen unter Ablagerung von Auftragsmetall in zwei ringförmigen Hohlräumen (24, 25) erfolgt, welche von den Verbindungs- bzw. Stoßflächen begrenzt werden, von welchen einer in das Innere des Gefäßes und der andere in die Außenseite des Gefäßes mündet, welche sich über dessen gesamten Umfang erstrecken und welche durch eine ringförmige Wand voneinander getrennt sind, die von zwei Zusammenbauflanschen (20, 21) gebildet wird, die vorspringend auf jeder der Verbindungs- bzw. Stoßflächen im Mittelbereich dieser jeweiligen ringförmigen Fläche über den gesamten Umfang des Gefäßes aufgeformt und beim Endzusammenbau des Gefäßes in gegenseitige Übereinstimmung und Anlage gebracht werden, wobei dem Verschweißen durch Ablagerung von Auftragsmetall in den beiden Hohlräumen ein teilweises Anfüllen eines der beiden Hohlräume mit einem Auftragsmetall (46) und eine spätere Entfernung durch Abarbeitung der Randflansche (20, 21), welche die ringförmige Wand bilden, und eines Teiles des abgelagerten Metalls (46) vorangeht, welche Zusammenbauvorgänge an den Untereinheiten bei horizontaler Lagerung von deren Achsen vorgenommen werden, dadurch gekennzeichnet, daß auf der Verbindungs bzw. Stoßfläche (6) einer der Untereinheiten (1) auf der Höhe eines der ringförmigen Hohlräume (24, 25) und auf einem Teilabschnitt des Umfangs des Gefäßes wenigstens drei hohle ansätze (26, 27, 28, 29) vorgesehen sind, die in bezug auf die Verbindungs- bzw. Stoßfläche (6) vorragen und ein in bezug auf die Außenfläche bzw. — wand des hohles Ansatzes vertieftes Lager (31) aufweisen, daß auf der Verbindungs — bzw. Stoßfläche der anderen Untereinheit (8) wenigstens drei Zentrieransätze (36, 37, 38, 39) vorgesehen sind, deren Form, Abmessung und Stellung der Form, Abmessung und Stellung der Lager (31) der Zentrieransätze (26, 27, 28, 29) entsprechen, wobei sich die Zentrieransätze (36, 37, 38, 39) und die hohle Ansätze (26, 27, 28, 29) an Stellen befinden, die genau in bezug auf die Stellungselemente für die inneren Ausrüstungen des Gefäßes markiert sind, daß wenigstens einer der Zentrieransätze (38) und wenigstens einer der hohle Ansätze (28) ein radial ausgerichtetes Keillager (32, 40) aufweist, daß das Aneinanderfügen der beiden Untereinheiten (1, 8) des Gefäßes vorgenommen wird, indem die erhabenen Zentrieransätze in den Innenraum der Lager der entsprechenden hohlen Ansätze eingeführt und die entsprechenden Flächen der Zusammenbauflansche (20, 21) in Anlage gebracht werden, um gleichzeitig eine Zentrierung, eine axiale Ausrichtung und die Stellungsorientierung der beiden Untereinheiten (1, 8) in bezug aufeinander zu bewirken, wobei gleichzeitig die Ausrichtung optisch überprüft wird, daß ein Keil (45) in das Lagerpaar (32, 40) eingeführt wird, das auf einem der Ansatzpaare (28, 38) vorgesehen ist, die während des Aneinanderfügevorgangs in bezug aufeinander ausgerichtet werden, um die beiden Untereinheiten (1, 8) in ihrer Stellung zu halten, daß danach der Zusammenbau der Ansätze miteinander durch Punktschweißen vor dem teilweisen Anfüllen eines der ringförmigen Hohlräume (24) mit Auftragsmetall erfolgt und daß durch maschinelle Bearbeitung bzw. Abtragung die Zentrieransätze und hohle Ansätze während des Abarbeitungsvorganges der Zusammenbauflansche (20, 21) und der Ablagerung des Auftragsmetalles (46) vor dem vollständigen Anfüllen der beiden ringförmigen Hohlräume (24, 25) mit Auftragsmetall zur Beendigung des Zusammenbaus entfernt werden.

2. Zusammenbauverfahren nach Anspruch 1, dadurch gekennzeichnet, daß die Zentrieransätze (36, 37, 38, 39) und die hohle Ansätze (26, 27, 28, 29) auf den entsprechenden Untereinheiten (1, 8) während des endgültigen Abarbeitungsvorganges dieser beiden Untereinheiten in horizontaler Stellung ausgebildet werden.

3. Zusammenbauverfahren nach einem der Ansprüche 1 und 2 für ein Reaktorgefäß für Druckwasser, dadurch gekennzeichnet, daß vier Zentrieransätze (36, 37, 38, 39) und vier hohle Ansätze (26, 27, 28, 29) auf jeder der Untereinheiten (1, 8) vorgesehen sind und daß die Ansätze mit der Verlängerung der Achsen der Keilnuten (13), die im Gefäßbund (2) im Verlauf der endgültigen Abarbeitung der oberen Untereinheit (1) ausgebildet werden, und mit den Achsen der Träger (14) der inneren Ausrüstungen des Gefäßes in bezug auf die untere Untereinheit (8) zentriert sind.

4. Zusammenbauverfahren nach einem der Ansprüche 1, 2 oder 3, dadurch gekennzeichnet, daß die fluchtende Ausrichtung der beiden Untereinheiten (1, 8), welche das Gefäß bilden, während des Zusammenbauvorgangs mittels eines Richtfernrohres und einer Anzahl von Visierkreuzen überprüft bzw. erreicht wird, die an genau vorgegebenen Stellen des Gefäßes vorgesehen sind.

5. Zusammenbauverfahren nach einem der Ansprüche 1, 2, 3 und 4, dadurch gekennzeichnet, daß die Untereinheiten auf Drehlagergestellen angeordnet sind, welche ihre Drehung um ihre horizontal gelagerte Symmetrieachse während des Zusammenbaus zulassen, wobei eine der Untereinheiten mittels eines Laufkranes gehandhabt wird, welcher das Einbringen der Zentrieransätze (36, 37, 38, 39) in die Lager der hohle Ansätze (26, 27, 28, 29) zuläßt.

0 019 551

FIG 1

FIG 2

FIG 3

FIG 4

FIG 5